**Europäisches Patentamt**

(19) **European Patent Office**

**Office européen des brevets**

(11) Publication number : **0 357 198 B1**

## (12) EUROPEAN PATENT SPECIFICATION

(45) Date of publication of patent specification :
09.12.92 Bulletin 92/50

(51) Int. Cl.⁵ : **C01B 11/02**

(21) Application number : **89307033.4**

(22) Date of filing : **11.07.89**

(54) Production of chlorine dioxide.

(30) Priority : **10.08.88 CA 574376**

(43) Date of publication of application :
**07.03.90 Bulletin 90/10**

(45) Publication of the grant of the patent :
**09.12.92 Bulletin 92/50**

(84) Designated Contracting States :
**AT DE ES FR GB IT SE**

(56) References cited :
**EP-A- 0 284 577**
**US-A- 3 895 100**
**US-A- 4 780 304**

(73) Proprietor : **Tenneco Canada Inc.**
**2 Gibbs Road**
**Islington Ontario M9B 1R1 (CA)**

(72) Inventor : **Zell, Michael Stephen**
**4393 Beacon Lane**
**Mississauga Ontario, L5C 4JB (CA)**
Inventor : **Fredette, Maurice Conrad Joseph**
**1316 Willowbank Trail**
**Mississauga Ontario, L4W 3V6 (CA)**

(74) Representative : **W.P. THOMPSON & CO.**
**Eastcheap House Central Approach**
**Letchworth, Hertfordshire SG6 3DS (GB)**

EP 0 357 198 B1

Jouve, 18, rue Saint-Denis, 75001 PARIS

## Description

The present invention relates to the production of chlorine dioxide by reduction of sodium chlorate.

Chlorine dioxide for use as a pulp mill bleach chemical is produced by reduction of sodium chlorate in an aqueous acid reaction medium. It is well known that the reaction to produce chlorine dioxide is represented by the equation:

$$ClO_3^- + Cl^- + 2H^+ \rightarrow ClO_2 + \tfrac{1}{2}Cl_2 + H_2O$$

The chloride ion for this reaction may be provided from an external source, in which case chlorine is co-produced with the chlorine dioxide, or may be provided in situ by reduction of the co-produced chlorine using reducing agents, such as methanol and sulfur dioxide.

One well-known commercial embodiment of the process is the so-called ERCO R3 (trademarks) process, wherein sodium chlorate, sodium chloride and sulfuric acid are reacted together at an acidity of about 2 to about 4.8 normal in a single vessel at the boiling point of the reaction medium while a subatmospheric pressure is applied to the reactor. The chlorine dioxide and chlorine are removed from the reaction vessel in admixture with the steam and anhydrous neutral sodium sulfate precipitates from the reaction medium, once saturation has been achieved after start-up. This process is generally described in U.S. Patent No. 3,864,456, assigned to the applicant hereof.

As described in U.S. Patent No. 3,895,100, assigned to the applicant hereof, a slurry of reaction liquor and sodium sulphate crystals is removed from the reaction vessel, the crystals are removed by filtration, make-up sodium chlorate and sodium chloride are added and the resulting recycle stream is reheated while being subjected to a back pressure sufficient to prevent it from boiling in the reboiler. The reheated recycle liquor passes through the throat of a venturi where make-up sulfuric acid is introduced. Chlorine dioxide production immediately commences and the recycle mixture is allowed to expand on the downstream side of the venturi and the resulting three-phase mixture of gases, solids and liquid is re-introduced to the reaction vessel. Chlorine dioxide and chlorine in the recycle mixture and produced in the reaction vessel are removed from the reaction vessel.

More recently, the ERCO R8 (trademark) process has become popular with pulp mills. This process differs from the R3 process in using a much higher acidity, generally greater than about 9 normal, and methanol in place of the sodium chloride. In addition, no catalyst is required. The result of the changes is that substantially pure chlorine dioxide is formed (the methanol reduces the co-produced chlorine to chloride ions) at greater efficiency than is achievable in the R3 process even with a catalyst. The R8 process is described in U.S. Patents Nos. 4,081,520, 4,393,035 and 4,393,036, assigned to the applicant hereof.

One drawback of the R8 process, however, is that, because of the significantly higher acidity that is used than in the R3 process, the sodium sulphate by-product is acidic and requires neutralization.

In the present invention, a novel manner of effecting the R8 process is provided whereby, if desired, the production of chlorine dioxide may be combined with R3 production at much lower acidity than is used in the R8 process, so as to obtain the sodium sulphate product in a less acidic form while the chlorine dioxide production rate is retained.

This result is achieved by placing a pipe of short length in the recycle venturi and introducing concentrated sulphuric acid and methanol to a portion of the recycle liquor passing through the pipe. The reaction of sodium chlorate, sulphuric acid and methanol in the high acidity environment of the pipe is very rapid and substantially complete before the reactants leave the pipe.

A mixed R3/R8 process can be practiced according to the invention by feeding sodium chloride into the remainder of the recycle liquor to form chlorine dioxide and chlorine by reaction, downstream of the short pipe, between the introduced sodium chloride, sodium chlorate in the recycle stream and sulphuric acid introduced to the pipe. In this mixed process, the product gas stream contains a proportion of chlorine, depending on the amount of sodium chloride introduced to the recycle stream.

The invention is described further, by way of illustration, with reference to the accompanying drawings, in which:

Figure 1 is a schematic representation of a chlorine dioxide generator modified in accordance with the present invention; and

Figure 2 is an enlarged view of the venturi throat of the chlorine dioxide generator of Figure 1.

Referring to the drawings, a chlorine dioxide generator unit 10 has an evaporator-crystallizer vessel 12 which has an upper outlet 14 for recovery of product chlorine dioxide from the unit 10. The chlorine dioxide product is removed as a gaseous admixture with steam produced by evaporation of the reaction medium in the vessel 12 and may contain some chlorine, depending on the efficiency of chlorine dioxide production and on whether or not sodium chloride is introduced as a reductant. The vessel 12 is subjected to subatmospheric pressure to maintain the reaction medium therein at the boiling point. The product gas stream in line 14 is processed to form an aqueous solution of chlorine dioxide for subsequent use, such as in pulp mill bleaching.

A slurry of crystallized by-product sodium sulphate in spent reaction medium is removed from the vessel by pipe 16, is passed by line 17 to a filter 18 for removal of the solid phase and the mother liquor is returned by line 19 to the recycle pipe 16. The by-product solid phase sodium sulphate recovered in line 20 may take the form of anhydrous neutral sodium sulphate, sodium sesquisulphate or mixtures containing varying proportions thereof, depending on the total acid normality of the reaction medium in the vessel 12, which may range from about 2 to about 12 normal, and even down to 0 normal, as discussed below. In the embodiment described below wherein a proportion of the chlorine dioxide product is produced by reaction between sodium chlorate, sodium chloride and sulphuric acid, the resulting lower reaction medium acidity, in the range of about 2 to about 4.8 normal, produces a solid by-product sodium sulphate which is neutral anhydrous sodium sulphate or substantially so. For reaction medium acid normalities from about 4.8 to about 6 normal, variable mixtures are obtained while, for acid normalities from about 6 to about 10, the sodium sulphate is sodium sesquisulphate or substantially so.

Sodium chlorate is fed to the recycle pipe 16 by line 22 to make up for sodium chlorate consumed in the process. Sodium chlorate is fed as an aqueous solution thereof to said recycle pipe 16, generally having a concentration of about 1 to about 7.5 molar, preferably about 5 to about 6.5 molar.

Feed of the make-up sodium chlorate solution produces a recycle solution generally having a concentration of sodium chlorate of about 0.25 to about 3.5 molar, preferably about 0.5 to about 1.5 molar. The recycle mixture then is pumped through a reboiler 24 by pump 26 to a venturi 28. The recycle mixture is heated by the reboiler 24 to the reaction temperature generally in the range of about 50° to about 90°C, preferably about 70° to about 80°C.

The upstream side of the venturi 28 converges towards the throat 30 and exerts a back pressure on the recycle stream which prevents the mixture from boiling in the reboiler 24.

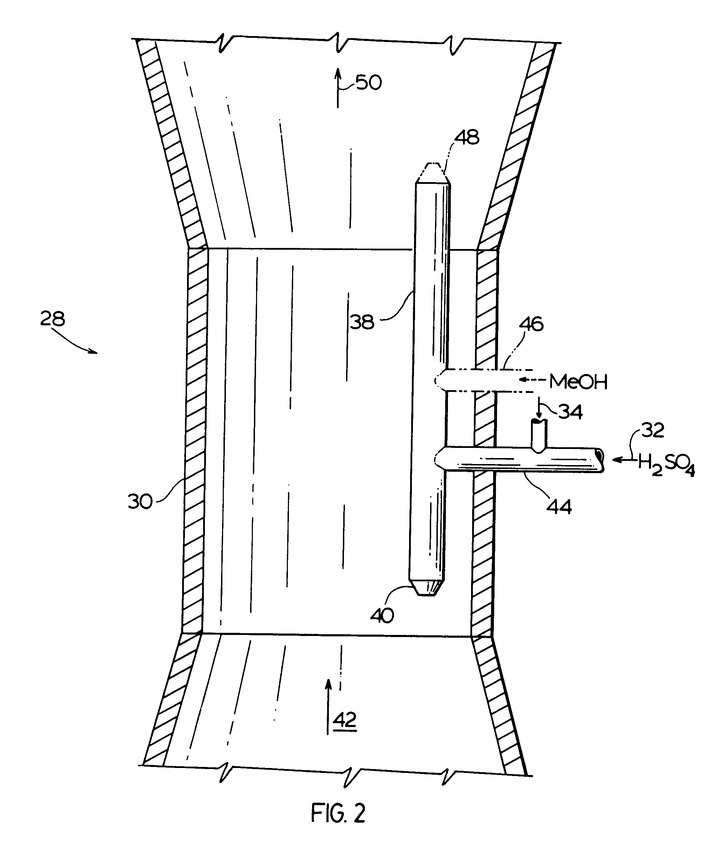

At the throat 30, sulphuric acid is fed by line 32 and methanol is fed by line 34 into the recycle stream, in the specific manner shown in Figure 2 and described in more detail below. As a result of the feed of these reactants, chlorine dioxide is generated and passes along with spent reaction medium through pipe 36 back to the vessel 12.

As seen more particularly in Figure 2, there is positioned within the venturi throat 30, an elongate pipe 38 which has a lower inlet 40 through which passes the recycle stream 42 which is passed through the pipe, varies with the relative diameters of the venturi throat 30 and the opening 40 to the pipe 38. The arrangement of Figure 2 with the pipe 38 within the venturi is the most convenient structure. However, the pipe 38 could be an external by-pass pipe.

The pipe 38 confines the reactants fed thereto in a high acidity environment which results in very rapid reaction and enabling all the chlorine dioxide that is to be produced from such reactants to be formed while the flowing reactants are confined within the pipe 38.

The pipe 38 is designed to provide a residence time in the pipe 38 sufficient to permit the reactants therein to form all the chlorine dioxide to be formed therefrom. The residence time generally is about 0.01 to about 1 secs, preferably about 0.2 to about 0.5 secs. This residence time can be achieved by any desired combination of pipe length and diameter and liquid flow rate.

Sulphuric acid in line 32 is fed to a pipe 44 which communicates with the pipe 38. The sulphuric acid is fed concentrated acid to the pipe 38, generally of concentration from about 30 to about 36 normal. Sulphuric acid is fed to the pipe 38 at a flow rate sufficient to establish the desired acidity of reaction medium in the pipe 38 and also the desired acidity of reaction medium in the generator 12. The diameter of the orifice 40 to the pipe 36 is controlled to provide the proportion of the recycle stream 42 required to match the flow rate of the sulphuric acid achieve a local environment in the pipe 38 having an acid normality within the desired range.

Methanol in line 34 is fed into the sulphuric acid feed pipe 42 and thence to the pipe 38. Alternatively, the methanol may be fed by a separate pipe 46 into the reactor pipe 38.

The feeds of sulphuric acid and methanol combined with the flow rate of recycle stream 42 through the pipe 38 result in the formation of a chlorine dioxide generating reaction medium in the pipe 38. The reaction medium so formed generally has a chlorate concentration of about 0.25 to about 3.5 molar, preferably about 0.5 to about 1.5 molar, an acidity of about 2 to about 10 normal, preferably about 9 to about 10 normal. At the prevailing reaction temperature (i.e., temperature of the recycle stream 42 leaving the reboiler 24), chlorine dioxide is rapidly formed and such formation is complete by the time the materials emerge from the pipe 38 through a downstream aperture 48 to form, with the proportion of the recycle stream 42 by-passing the pipe, a combined stream 50 which passes to the vessel 12.

Production of chlorine dioxide in the pipe 38 may form part only of the overall chlorine dioxide with the remainder of the chlorine dioxide being generated by reduction of the sodium chlorate with added chloride ions, usually in the form of sodium chloride, fed to the recycle pipe 16 by line 52. Such sodium chloride usually is added as an aqueous solution thereof generally of a concentration from about 1 to about 5 molar, preferably about 4.5 to about 5 molar, or may be fed to the recycle pipe 16 in admixture with the sodium chlorate in line 22.

Feed of sodium chloride solution to the recycle pipe 16 results in a concentration of sodium chloride in the recycle solution of about 0.001 to about 2 molar.

When chlorine dioxide is generated partly by reaction between sodium chlorate, sodium chloride and sulphuric acid, the acidity of the reaction medium downstream of the pipe 38 and in the reaction vessel 12 preferably is within the range conventionally used in the R3 process, namely from about 2 to about 4.8 normal, which results in the production of essentially neutral anhydrous sodium sulphate.

The acidity of the reaction medium is controlled by the flow rate of the sulphuric acid to the pipe 38. It is known that, as a result of the equilibrium:

$$HSO_4^- = H^+ + SO_4^=$$

with k = $2 \times 10^{-2}$, approximately 98% of the acidity is tied up as $HSO_4^-$ and only about 2% is free hydrogen ion provided the solution is saturated with respect to sulphate ions, as in the reaction medium in the vessel 12. At 9 normal sulphuric acid, this produces approximately 0.18N free hydrogen ions.

It is also known that the production of chlorine dioxide is proportional to the relationship:

$$\frac{T\,[H^+]^{3\,to\,4}\,[ClO_3^-]^2\,[Cl^-]^2}{[ClO_2]\,[Cl_2]}$$

Only free hydrogen ions are able to produce chlorine dioxide. Within the tube 38, it is possible to provide at least 0.18N free hydrogen ion, even at very low total acid normalities (down to zero) in the reaction vessel 12, since a non-equilibrium situation exists where 36N sulfuric acid is being added by line 32, producing 18N free $H^+$.

It is also possible, from this free hydrogen ion concept, to use larger volumes of recycle liquor of lower chlorate concentration diverted to the tube 38, while still retaining adequate chlorine dioxide production, thereby providing more flexibility to the process.

An efficiency improving catalyst also may be included in the reaction medium in the vessel 12, in accordance with conventional R3 practice. Such catalysts include Ag, Mn, Cr, Pd and Pt, in the form of metals, and compounds and complexes.

The relative proportions of the reduction of chlorate effected with added chloride ions and with methanol may vary widely, generally from 0.1% by methanol with the balance by chloride ions to 100% by methanol. As the proportion of reductant which is chloride ions increases, more co-produced chlorine appears in the product gas stream.

The invention is illustrated by the following Examples:

## Example 1

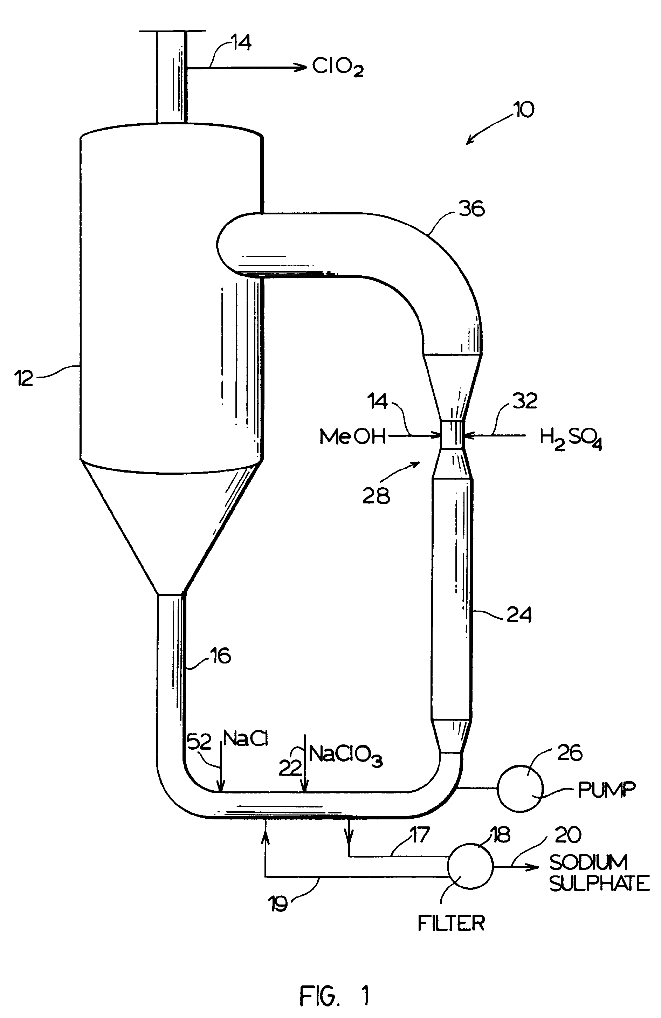

A 10 TPD (tonnes per day) chlorine dioxide generating plant is set up as illustrated in Figures 1 and 2. 4000 USGPM (U.S. gallons per minute) (approximately 15,000 litres/min) of recycle liquor having an acidity of about 7N and a sodium chlorate concentration of 4 molar enters the venturi pipe 30. The aperture at the upstream end of the pipe 38 is sized to permit a flow of 10 USGPM into the pipe. 1.0 USGPM (approximately 3.75 litres/min) of 36N sulphuric acid and 0.3 USGPM (approximately 1.25 litres/min) of methanol are flowed to the pipe 38 through pipe 44 to establish therein an acidity of 9.38N. the pipe 38 is sized to permit a residence time of 0.5 seconds, which is sufficient for complete reaction of the sodium chlorate to chlorine dioxide to occur in the pipe. Chlorine dioxide of purity 98% at a chemical efficiency of 98% is recovered from the generator by line 14. Crystals of sodium sulphate recovered from the generator in line 20 analyze approximately 100% sodium sesquisulphate.

## Example 2

The procedure of Example 1 was repeated, except that 50% of the chlorine dioxide production was by reaction with methanol in pipe 38 and 50% by reaction with sodium chloride fed by line 52 to the recycle pipe 16. The recycle liquor has an acidity of 3.5 normal and a sodium chlorate concentration of 4 molar. In this case, 2.8 USGPM (approximately 9.6 litres/min) of 5.0 molar sodium chloride is fed to the recycle pipe 16, 1.3 USGPM (approximately 5 litres/min) of 36N sulphuric acid and 0.15 USGPM (approximately 0.6 litres/min) of methanol are flowed to the pipe 38 by line 44 to establish within the pipe 38 an acidity of 7.14 N.

Chlorine dioxide is produced at a chemical efficiency of 97% and is recovered from the generator by line 14. Crystals of anhydrous neutral sodium sulphate are recovered from the generator. About 3 TPD of $Cl_2$ is co-produced with the 10 TPD chlorine dioxide, i.e., the chlorine dioxide has a purity of about 77%.

## Example 3

The procedure of Example 1 is repeated, except that the total acid normality of the recycle stream is decreased to 3.5N. Under these conditions, the total acid normality in the pipe 38 drops to 6.28 compared to the total acid normality of 9.38 in Example 1. Efficient chloride dioxide production is retained, since the free hydrogen ion concentration in the pipe 38 is still at least 0.18N $H^+$, as can be seen from the calculation:

$$\frac{10 \times 0.02 \times 3.5 \ + \ 1 \times 18N \text{ free } H\pm}{11.3 \text{ USGPM (approximately 43 litres/min free } H^+}\ = 1.65N$$

## Example 4

The procedure of Example 1 is repeated, except that 20 USGPM of 2M $NaClO_3$ is employed as the recycle liquor. This flow rate produces a total acid normality of 8.62N. Efficient chlorine dioxide production is retained since the free hydrogen ion concentration remains at least 0.18N fee $H^+$, as can be seen from the calculation:

$$\frac{20 \times 0.02 \times 7 \times 1 \times 18}{21.3 \text{ USGPM (approximately 80 litres/min)}} = 0.98\text{N}$$
$$\text{free } H^+$$

Example 5

The recycle stream entering pipe 38 may have as low as zero normal total acid normality and still sufficient free hydrogen ion concentration can be achieved in the pipe 38 to effect efficient chlorine dioxide production. Repeating the procedure of Example 1 but with a recycle stream on 0N total acid normality, the corresponding calculation to that in Example 3:

$$\frac{10 \times 0 + 1 \times 18}{11.3} = 1.56 \text{ free } H^+$$

with the total acid normality in the pipe being calculated as:

$$\frac{10 \times 0 + 1 \times 36}{11.3} = 3.18\text{N}$$

In summary of this disclosure, the present invention provides a novel method of producing chlorine dioxide wherein chlorine dioxide less contaminated with chlorine can be produced with less acid sodium sulphate being produced. Modifications are possible within the scope of this invention.

**Claims**

1. A process for preparing chlorine dioxide, characterized by the steps of (a) feeding into a first elongate zone an aqueous sodium chlorate-containing stream having an elevated temperature corresponding to its boiling point at a subatmospheric pressure applied to the downstream end of the first zone, (b) diverting a portion of the aqueous sodium chlorate-containing stream into a second elongate zone, (c) feeding methanol and sulphuric acid into the second elongate zone to form a chlorine dioxide-generating reaction medium therein, (d) generating chlorine dioxide from the chlorine dioxide-generating reaction medium in the second elongate reaction zone, (e) discharging chlorine dioxide and spent reaction medium from the second elongate zone and aqueous sodium chlorate-containing stream from the first elongate zone into an evaporating and crystallizing zone wherein by-product crystalline sodium sulphate is formed, and (f) recovering a gaseous admixture of chlorine dioxide and steam and removing crystalline sodium sulphate from the evaporating and crystallizing zone.

2. A process as claimed in claim 1, characterized in that the second elongate zone is located within the first elongate zone.

3. A process as claimed in claim 1 or 2, characterized in that the directed portion of the aqueous sodium chlorate solution and the fed methanol and sulphuric acid result in a concentration of free hydrogen ions in the second elongate zone of at least 0.18 normal.

4. A process as claimed in any one of claims 1 to 3, characterized that the chlorine dioxide-generating reaction medium has a residence time of 0.01 to 1 seconds in the second elongate reaction zone.

5. A process as claimed in any one of claims 1 to 4, characterized in that the chlorine dioxide-generating reaction medium in the second elongate zone has a chlorate concentration of 0.25 to 3.5 molar and an acidity of 2 to 10 normal.

6. A process as claimed in any one of claims 1 to 5, characterized in that the aqueous sodium chlorate containing stream has a sodium chloride concentration of about 0.001 to about 2 molar, so that chlorine dioxide also is generated by reaction between sodium chlorate, sodium chloride and sulphuric acid in a reaction medium downstream of the second elongate zone in the evaporating and crystallizing zone.

7. A process as claimed in claim 6, characterized in that the reaction medium in the evaporating and crystallizing zone has an acidity of less than 4.8 normal.

8. A process as claimed in claim 6 or 7, characterized in that the proportion of chlorine dioxide formed by reaction with methanol in the second elongate zone and the proportion of chlorine dioxide formed by reaction with chloride ions downstream of the second elongate zone is at least 0.1% by methanol and less than 99.9% by chloride ions.

9. A process as claimed in any one of claims 1 to 6, characterized in that the spent reaction medium has a total acid normality from 0 to 12 normal.

10. A process as claimed in claim 1, characterized in that the crystalline by-product sodium sulphate is removed from the evaporating and crystallizing zone in admixture with spent reaction medium, make-up sodium chlorate is added to the admixture, by-product sodium sulphate is removed from the admixture, to provide a recycle stream containing sodium chlorate and sulphuric acid, the recycle stream is heated to an elevated temperature corresponding to its boiling point at the subatmospheric pressure and the heated recycle stream is fed to said first elongate zone as the aqueous sodium chlorate-containing stream.

## Patentansprüche

1. Verfahren zur Herstellung von Chlordioxid, gekennzeichnet durch die Stufen (a) Einspeisen eines wäßrigen, Natriumchlorat enthaltenden Stromsmit erhöhter Temperatur, die deren Siedepunkt bei Unter-Atmosphärendruck am Abstromende einer ersten, langgestreckten Zone entspricht,in diese Zone, (b) Abzweigen eines Teils des wäßrigen, Natriumchlorat enthaltenden Stroms in eine zweite, langgestreckte Zone,(c) Einspeisen von Methanol und Schwefelsäure in die zweite,langgestreckte Zone zur Bildungs eines Chlordioxid erzeugenden Reaktionsmediums in dieser Zone, (d) Erzeugen von Chlordioxid aus dem Chlordioxid bildenden Reaktionsmedium in der zweiten,langgestreckten Reaktionszone,(e)Austragen von Chlordioxid und verbrauchtem Reaktionsmedium aus der zweiten langgestreckten Zone und von dem wäßrigen, Natriumchlorat enthaltenden Strom aus der ersten langgestreckten Zone in eine Verdampfungs- und kristallisationszone, in welcher das Nebenprodukt kristallines Natriumsulfat gebildet wird, und (f) Isolieren eines gasförmigen Gemisches aus Chlordioxid und Wasserdampf und Entfernen des kristallinen Natriumsulfats aus der Verdampfungs- und Kristallisationszone.

2. Verfahren nach Anspruch 1,dadurch gekennzeichnet,daß die zweite langgestreckte Zone innerhalb der ersten langgestreckten Zone angeordnet ist.

3. Verfahren nach Anspruch 1 oder 2, dadurch gekennzeichnet, daß der ausgerichtete Teil der wäßrigen Natriumchloratlösung und das eingespeiste Methanol und Schwefelsäure eine konzentration von Wasserstoffionen in der zweiten langgestreckten Zone von wenigstens o,18-normal ergeben.

4. Verfahren nach den Ansprüchen 1 bis 3,dadurch gekennzeichnet daß das Chlordixid erzeugende Reaktionsmedium eine Verweildauer von 0,01 bis 1 Sekunde in der zweiten langgestreckten Reaktionszone hat.

5. Verfahren nach den Ansprüchen 1 bis 4,dadurch gekennzeichnet,daß das Chlordioxid erzeugende Reaktionsmedium in der zweiten langgestreckten Zone eine Chloratkonzentration von0,25 bis 3,5-molar und eine Azidität von 2 bis 10-normal hat.

6. Verfahren nach den Ansprüchen 1 bis 5,dadurch gekennzeichnet, daß der wäßrige,Natriumchlorat enthaltende Strom eine Natriumchloridkonzentration von etwa 0,001 bis etwa 2-molar hat,sodaß Chlordioxid auch durch Reaktion zwischen Natriumchlorat, Natriumchlorid und Schwefelsäure in einem REaktionsmedium stromabwärts der zweiten langgestreckten Zone in der Verdampfungs- und Kristallisationszone erzeugt wird.

7. Verfahren nach Anspruch 6, dadurch gekennzeichnet,daß das Reaktionsmedium in der Verdampfungs- und kristallisationszone eine Azidität von weniger als 4,8-normal hat.

8. Verfahren nach Anspruch 6 oder 7, dadurch gekennzeichnet,daß der Mengenanteil Chlordioxid, der durch Reaktion mit Methanol in der zweiten langgestreckten Zone gebildet wird und der Mengenanteil Chlordioxid,der durch Reaktion mit Chloridionen stromabwärts der zweiten langgestreckten Zone gebildet wird, wenigstens 0,1 % durch Methanol und weniger als 99,9 % durch Chloridionen beträgt.

9. Verfahren nach den Ansprüchen 1 bis 6,dadurch gekennzeichnet,daß das verbrauchte Reaktionsmedium eine gesamte Säurenormalität von 0 bis 12-normal hat.

10. Verfahren nach Anspruch 1,dadurch gekennzeichnet,daß das kristalline Nebenprodukt Natriumsulfat aus der Verdampfungs- und Krsitallisationszone im Gemisch mit verbrauchtem Reaktionsmedium entfernt wird, aufgearbeitetes Natriumchlorat zu dem Gemisch zugefügt wird, das Nebenprodukt Natriumsulfat aus dem Gemisch entfernt wird, sodaß ein rückgeführter Strom erzeugt wird,der Natriumchlorat und Schwefelsäure enthält und daß der rückgeführte Strom auf eine erhähte Temperatur erhitzt wird, die dessen Siedepunkt bei Unter-Atmosphärendruck entspricht, und daß der erhitzte,rückgeführte Strom in die erste langgestreckte Zone als der wäßrige,Natriumchlorat enthsltende Strom eingespeist wird.

## Revendications

1. Procédé de préparation de bioxyde de chlore, caractérisé par les étapes suivantes : (a) on achemine dans une première zone allongée un courant contenant du chlorate de sodium aqueux ayant une température élevée correspondant à son point d'ébullition sous une pression subatmosphérique appliquée à l'extrémité aval de la première zone, (b) on fait diverger une partie du courant contenant du chlorate de sodium aqueux dans une seconde zone allongée, (c) on achemine du méthanol et de l'acide sulfurique dans la seconde zone allongée pour y former un milieu réactionnel générateur de bioxyde de chlore, (d) on génère le bioxyde de chlore provenant du milieu réactionnel générateur de bioxyde de chlore dans la seconde zone réactionnelle allongée, (e) on décharge le bioxyde de chlore et le milieu réactionnel épuisé de la seconde zone allongée et le courant contenant le chlorate de sodium aqueux de la première zone allongée dans une zone d'évaporation et de cristallisation où se forme un sous-produit de sulfate de sodium cristallisé et (f) on récupère un mélange gazeux de bioxyde de chlore et de vapeur d'eau et on retire le sulfate de sodium cristallisé de la zone d'évaporation et de cristallisation.

2. Procédé selon la revendication 1, caractérisé en ce que la seconde zone allongée est disposée à l'intérieur de la première zone allongée.

3. Procédé selon la revendication 1 ou 2, caractérisé en ce que la partie dirigée de la solution de chlorate de sodium aqueux et le méthanol et l'acide sulfurique acheminés entraînent une concentration d'ions hydrogène libres dans la seconde zone allongée d'au moins 0,18 normale.

4. Procédé selon l'une quelconque des revendications 1 à 3, caractérisé en ce que le milieu réactionnel générateur de bioxyde de chlore a un temps de séjour de 0,01 à 1 seconde dans la seconde zone réactionnelle allongée.

5. Procédé l'une quelconque des revendications 1 à 4, caractérisé en ce que le milieu réactionnel générateur de bioxyde de chlore dans la seconde zone allongée a une concentration en chlorate 0,25 à 3,5 molaire et une acidité de 2 à 10 normale.

6. Procédé selon l'une quelconque des revendications 1 à 5, caractérisé en ce que le courant contenant le chlorate de sodium aqueux a une concentration en chlorure de sodium environ 0,001 à environ 2 molaire de telle sorte que du bioxyde de chlore soit également généré par réaction entre le chlorate de sodium, le chlorure de sodium et l'acide sulfurique dans un milieu réactionnel situé en aval de la seconde zone allongée dans la zone d'évaporation et de cristallisation.

7. Procédé selon la revendication 6, caractérisé en ce que le milieu réactionnel de la zone d'évaporation et de cristallisation a une acidité inférieure à 4,8 normale.

8. Procédé selon la revendication 6 ou 7, caractérisé en ce que la proportion de bioxyde de chlore formée par réaction avec le méthanol dans la seconde zone allongée et la proportion de bioxyde de chlore formée par réaction avec les ions chlorure en aval de la seconde zone allongée sont formées à raison d'au moins 0,1 % par le méthanol et de moins de 99,9 % par les ions chlorure.

9. Procédé selon l'une quelconque des revendications 1 à 6, caractérisé en ce que le milieu réactionnel épuisé a une normalité acide totale de 0 à 12 normale.

10. Procédé selon la revendication 1, caractérisé en ce que le sous-produit de sulfate de sodium cristallisé est retiré de la zone d'évaporation et de cristallisation en mélange avec le milieu réactionnel épuisé, du chlorate de sodium d'appoint est ajouté au mélange, le sous-produit de sulfate de sodium est éliminé du mélange pour obtenir un courant de recyclage contenant du chlorate de sodium et de l'acide sulfurique, le courant de recyclage est chauffé à une température élevée correspondant à son point d'ébullition sous pression subatmosphérique et le courant de recyclage chauffé est acheminé à la première zone allongée précitée comme courant contenant le chlorate de sodium aqueux.

FIG. 1

FIG. 2